Europäisches Patentamt

European Patent Office

Office européen des brevets

(11) Publication number: **0 175 928**
**A2**

(12) # EUROPEAN PATENT APPLICATION

(21) Application number: **85110533.8**

(22) Date of filing: **22.08.85**

(51) Int. Cl.⁴: **G 06 F 15/70**
**G 06 K 9/00**

(30) Priority: **24.08.84 JP 174924/84**

(43) Date of publication of application:
**02.04.86 Bulletin 86/14**

(84) Designated Contracting States:
**DE FR GB**

(71) Applicant: **HITACHI, LTD.**
**6, Kanda Surugadai 4-chome Chiyoda-ku**
**Tokyo 100(JP)**

(72) Inventor: **Nakano, Yasuaki**
**5-22-9, Nishihirayama**
**Hino-shi Tokyo(JP)**

(72) Inventor: **Fujisawa, Hiromichi**
**3-15-K-510, Kotesashi-cho**
**Tokorozawa-shi Saitama-ken(JP)**

(72) Inventor: **Higashino, Junichi**
**4-14-6, Nishikoigakubo**
**Kokubunji-shi Tokyo(JP)**

(72) Inventor: **Ejiri, Masakazu**
**4-18-17, Nakaarai**
**Tokorozawa-shi Saitama-ken(JP)**

(74) Representative: **Patentanwälte Beetz sen. - Beetz jun.**
**Timpe - Siegfried - Schmitt-Fumian**
**Steinsdorfstrasse 10**
**D-8000 München 22(DE)**

(54) **Image understanding system.**

(57) An image understanding system of this invention uses a grammer describing a document image, and represents the structure of an unknown input image by parsing a statement (the structure of the grammer) written in accordance with this grammer. In other words, the grammer describes an image as substructures and the relative relation between them, and when the substructures and their relative relation are identified in parsing, search is then made whether or not the substructures and their relative relation exist in an unknown input image. The structure of the unknown input image is represented on the basis of the result of this search.

S P E C I F I C A T I O N

TITLE OF THE INVENTION:

IMAGE UNDERSTANDING SYSTEM

BACKGROUND OF THE INVENTION

This invention relates generally to a processing system of a document image, and more particularly to a document image processing system suitable as an input unit to an electronic document image file.

Conventional electronic document files merely store each page of a document as an image, and secondary information for information retrieval must separately be given from outside using code input means (e.g., a keyboard). In order to automate a file input work, however, it is preferred that secondary information is generated by automatically reading titles, author names and the like described in the documents. In order to further improve information retrieval, it becomes necessary to realize automatic input of the captions of tables and chapter captions, or automatic keyword extraction by recognition of the text itself. Segmentation of the image of the object document into portions such as captions, authors, abstract, text, figures, pictures, and the like, has also been required to reduce the memory space and to increase facets for retrieval.

A system which understands the content of a document and processes the document on the basis of the result of understanding to cope with the problems described above has so far been investigated, and an example of such a system is disclosed in "Basic Studies on System for Cuttings of Newspaper Articles" by Yoji Noguchi and Junichi Toyota (Resume 6C-1 of the 23rd National Convention of Information Processing Society of JAPAN, 1981). However, since this document understanding system is directed to the cuttings of newspapers, it is not clear whether or not the technique can be applied to documents having arbitrary formats. In addition, the portions of characters are merely segmented, but a method of combining segmentation with recognition is not disclosed.

### SUMMARY OF THE INVENTION

The present invention is directed to provide an image understanding system which deals with ordinary document images, segments them in accordance with their structures, and makes it possible to recognize the character portions, whenever necessary.

In order to accomplish the object described above, the present invention ueses a grammer describing the structure of a document image, and parses the statements (the structures of the document) expressed by the grammer to recognize the structure of an unknown input image.  The grammer describes the image as substructures and the relative relation between them.

In the parsing process, after the substructures and their relative relation are identified, search is made as to whether or not the substructures and the relative relation exist in the unknown input image, and if they do, the inside of the substructures is further resolved to proceed the analysis.  If they do not, other possibilities are searched.  The structure of the unknown input image is understood from the result of such a search.

BRIEF DESCRIPTION OF THE DRAWINGS

Fig. 1 shows an example of documents;

Fig. 2 shows an embodiment of the present invention;

Figs. 3, 4, 5 and 6 are flowcharts useful for explaining the processing at a control unit shown in Fig. 2;

Fig. 7 is a referential view showing an example of documents;

Figs. 8, 9, 10, 11, 12 and 13 are explanatory

views useful for explaining the principle of a fourth embodiment of the present invention;

Figs. 14 and 15 are flowcharts useful for explaining the processing at the control unit 102 in the fourth embodiment of the present invention; and

Figs. 16 and 17 are explanatory views useful for explaining the content of processing shown in Fig. 15.

### DESCRIPTION OF THE PREFERRED EMBODIMENTS

First of all, a parsing method in the embodiments of the invention will be explained before the description of the embodiments. Though the following description will deal with technical paper as an example of documents, the present invention can also be applied to other documents by changing some parts of a grammer because the grammer formats are somewhat different. Therefore, the present invention is not particularly limited to the example of the technical paper.

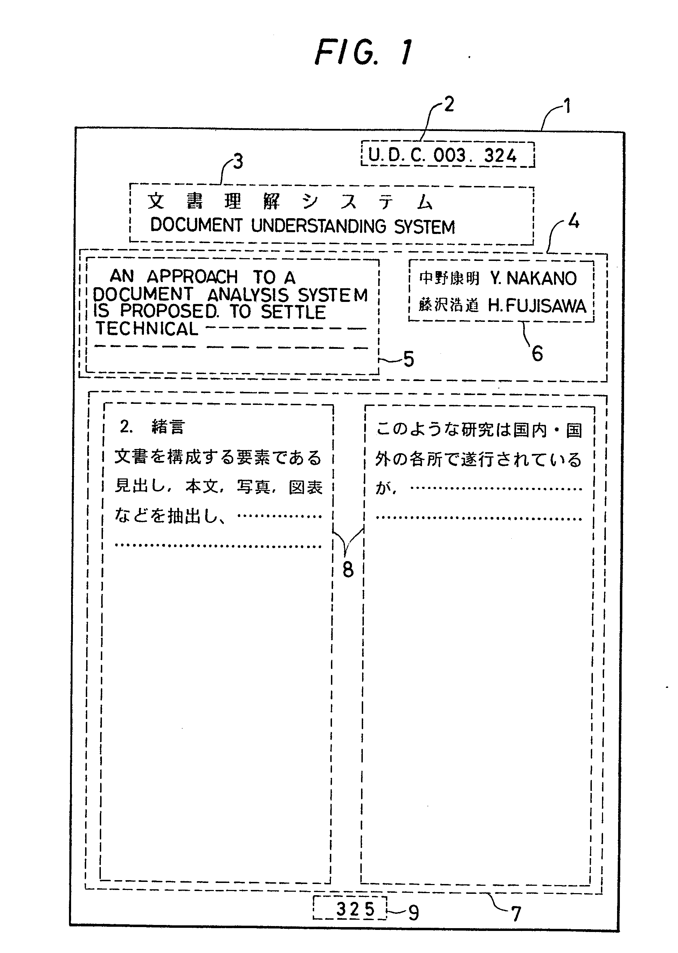

Fig. 1 shows an example of one page of technical paper having a predetermined format. The following illustrates an example of the grammer (hereinafter referred to as "document grammer") expressing the structures of the documents.

(textline)

| 1 | $\langle$document$\rangle$ | ::= ¦ $\langle$technical paper$\rangle$ \| $\langle$paperback novel$\rangle$ \|~\| $\langle$patent$\rangle$ |
| 2 | $\langle$technical paper$\rangle$ | ::= $\langle$title page$\rangle$ |
| 3 | $\langle$technical paper$\rangle$ | ::= $\langle$technical paper$\rangle$ [+ $\langle$continued page:$\rangle$] |
| 4 | $\langle$title page$\rangle$ | ::= \| $\langle$UDC$\rangle$ η $\langle$title content$\rangle$ η $\langle$author abstract$\rangle$ η $\langle$text$\rangle$ η $\langle$title page separator$\rangle$ |
| 5 | $\langle$continued page$\rangle$ | ::= $\langle$heading$\rangle$ η $\langle$text$\rangle$ η $\langle$page separator$\rangle$ |
| 6 | $\langle$UDC$\rangle$ | ::= $\langle\langle$UDC$\rangle\rangle$ ξ $\langle$period numeral$\rangle$ [ξ $\langle\langle$CL$\rangle\rangle$ ξ $\langle$period numeral$\rangle$] |
| 7 | $\langle$heading$\rangle$ | ::= $\langle$Japanese title$\rangle$ ξ $\langle$volume number$\rangle$ ξ $\langle$numeral$\rangle$ |
| 8 | $\langle$volume number$\rangle$ | ::= $\langle\langle$VOL$\rangle\rangle$ ξ $\langle$numeral$\rangle$ ξ $\langle\langle$NO$\rangle\rangle$ ξ $\langle$numeral$\rangle$ |
| 9 | $\langle$title content$\rangle$ | ::= $\langle$Japanese title$\rangle$ η $\langle$English title$\rangle$ |
| 10 | $\langle$Japanese title$\rangle$ | ::= $\langle$Japanese textline region$\rangle$ |
| 11 | $\langle$English title$\rangle$ | ::= $\langle$English textline region$\rangle$ |
| 12 | $\langle$author abstract$\rangle$ | ::= $\langle$abstract$\rangle$ ξ $\langle$author group$\rangle$ |
| 13 | $\langle$abstract$\rangle$ | ::= $\langle$English textline region$\rangle$ |
| 14 | $\langle$author group$\rangle$ | ::= $\langle$author$\rangle$ |
| 15 | $\langle$author group$\rangle$ | ::= $\langle$author group$\rangle$ [η $\langle$author$\rangle$] |
| 16 | $\langle$author$\rangle$ | ::= $\langle$Japanese textline$\rangle$ ξ $\langle$English textline$\rangle$ |
| 17 | $\langle$page number$\rangle$ | ::= $\langle$numeral$\rangle$ |
| 18 | $\langle$text$\rangle$ | ::= $\langle$column$\rangle$ ξ $\langle$column$\rangle$ |
| 19 | $\langle$column$\rangle$ | ::= $\langle$section$\rangle$ [η $\langle$column$\rangle$] |
| 20 | $\langle$section$\rangle$ | ::= $\langle$chapter caption$\rangle$ η $\langle$section caption$\rangle$ η $\langle$section text$\rangle$ |
| 21 | $\langle$section$\rangle$ | ::= $\langle$section caption$\rangle$ η $\langle$section text$\rangle$ |
| 22 | $\langle$section$\rangle$ | ::= $\langle$section text$\rangle$ |

23 ⟨section⟩ ::= ⟨reference⟩ η ⟨reference list⟩

24 ⟨chapter caption⟩ ::= ⟪numeral⟫ ξ ⟨Japanese textline⟩

25 ⟨section caption⟩ ::= ⟨period.numeral⟩ ξ ⟨Japanese textline⟩

26 ⟨section text⟩ ::= ⟨paragraph⟩ [η ⟨section text⟩]

27 ⟨paragraph⟩ ::= ⟨Japanese textline region⟩

28 ⟨paragraph⟩ ::= ⟨figure table⟩

29 ⟨Japanese textline region⟩ ::= ⟨Japanese textline⟩ η [⟨Japanese textline region⟩]

30 ⟨Japanese textline⟩ ::= ⟪Japanese character⟫ ξ [⟨Japanese textline⟩]

31 ⟨Japanese textline⟩ ::= ⟪Japanese character⟫ α [⟨Japanese textline⟩]

32 ⟨Japanese textline⟩ ::= ⟪Japanese character⟫ β [⟨Japanese textline⟩]

33 ⟨English textline region⟩ ::= ⟨English textline⟩ η [⟨English textline region⟩]

34 ⟨English textline⟩ ::= ⟨word⟩ ξ ⟪DLM⟫ ξ [⟨English textline region⟩]

35 ⟨word⟩ ::= ⟪alphabet⟫ [ξ ⟨word⟩]

36 ⟨word⟩ ::= ⟪alphabet⟫ [α ⟨word⟩]

37 ⟨word⟩ ::= ⟪alphabet⟫ [β ⟨word⟩]

38 ⟨word⟩ ::= |{English person name}| {English organization name}|
{English location name}|
|{general English word}|

39 ⟨numeral⟩ ::= ⟪numeral⟫ [ξ ⟨numeral⟩]

40 ⟨period numeral⟩ ::= ⟨numeral⟩

41 ⟨period numeral⟩ ::= ⟨period numeral⟩ ξ ⟨numeral⟩

42 ⟨period numeral⟩ ::= ⟨period numeral⟩ ξ ⟪PR⟫

43 ⟪numeral⟫ ::= |0|1|∼|9|

44 ⟪alphabet⟫ ::= |a|b|c|d|∼|A|B|∼|0|1|∼|

| 45 | 《Japanese character》 | ::= |あ|い|~|ア|イ|~|日|立|~|a|b| ~|A|B|~|0|1|~1 |
| 46 | 《DLM》 | ::= | |,|.|~| |
| 46 | 《CL》 | ::= |:| |
| 47 | 《PR》 | ::= |.|,|]| |
| 48 | 〈figure table〉 | ::= ⊢figure⊣ η 〈Japanese explanation〉 η 〈English explanation〉 |
| 49 | 〈figure table〉 | ::= 〈Japanese explanation〉 η 〈English explanation〉 η 〈table〉 |
| 50 | 〈figure table〉 | ::= 〈box〉 |
| 51 | 〈box〉 | ::= ⊢field⊣ ⊚ 〈section〉 |
| 52 | 〈Japanese explanation〉 | ::= 《word-figure》 ξ 〈numeral〉 ξ 〈Japanese textline〉 |
| 53 | 〈Japanese explanation〉 | ::= 《word-table》 ξ 〈numeral〉 ξ 〈Japanese textline〉 |
| 54 | 〈Japanese explanation〉 | ::= 〈Japanese explanation〉 η 〈Japanese textline region〉 |
| 55 | 〈English explanation〉 | ::= 《FIG》 ξ 〈numeral〉 ξ 〈English textline〉 |
| 56 | 〈English explanation〉 | ::= 《TAB》 ξ 〈numeral〉 ξ 〈English textline〉 |
| 57 | 〈English explanation〉 | ::= 〈English explanation〉 η 〈English textline region〉 |
| 58 | 《FIG》 | ::= |F i g.| |
| 59 | 《TAB》 | ::= |T a b l e| |
| 60 | 《word-figure》 | ::= | figure| |

61 ⟨word-table⟩  ::=  |table|

63 ⟪VOL⟫  ::=  |VOL|

64 ⟪NO⟫  ::=  |No.|

73 ⟪UDC⟫  ::=  |U. D. C.|

66 ⟨table⟩  ::=  ⟨box⟩ γ ⟨table⟩ [δ ⟨table⟩]

67 ⟨table⟩  ::=  ⟨box⟩ δ ⟨table⟩ [γ ⟨table⟩]

68 ⟨table⟩  ::=  ⟨box⟩

69 ⟪reference⟫  ::=  |reference|

70 ⟨reference list⟩  ::=  ⟨Japanese reference⟩[η ⟨reference list⟩]

71 ⟨reference list⟩  ::=  ⟨English reference⟩ [η ⟨reference list⟩]

72 ⟨Japanese reference⟩  ::=  ⟨numeral⟩ ξ ⟪PR⟫ ξ ⟨Japanese textline⟩

73 ⟨Japanese reference⟩  ::=  ⟨Japanese reference⟩ [η ⟨Japanese textline group⟩]

74 ⟨English reference⟩  ::=  ⟨ numeral⟩ ξ ⟪PR⟫ ξ ⟨English textline⟩

75 ⟨Japanese reference⟩  ::=  ⟨English reference⟩ [η ⟨English textline group⟩]

The document grammer described above expresses
the structure of ordinary document, but particularly
extracts the portions relating to the technical paper.
The grammer will now be explained with reference to the
example shown in Fig. 1.  First of all, symbols used will
be explained.

( )        nonterminal symbol (abstract concept)

⟨⟨⟩⟩       terminal symbol     (character string)

{ }        terminal symbol     (character string in dictionary)

⊢ ⊣        terminal symbol     (substructure in image)

::=        rewriting rule

|          OR (or)

[ ]        omissible

+, ξ,  η,  α,  β, ◎ , γ, δ operators between sub-
structures

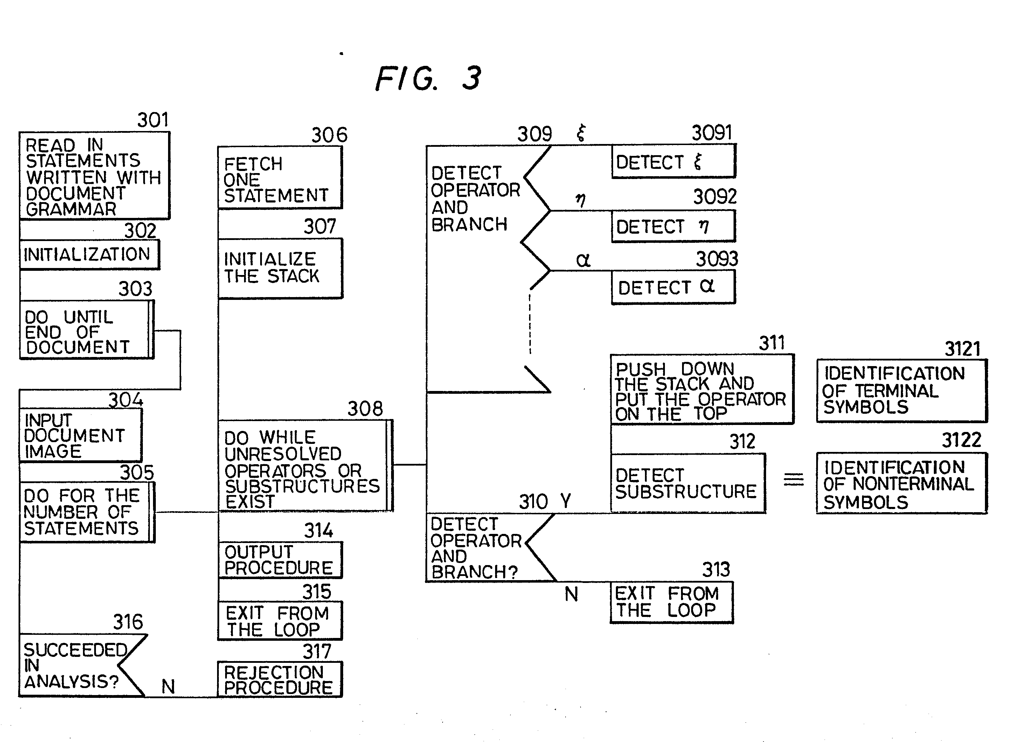

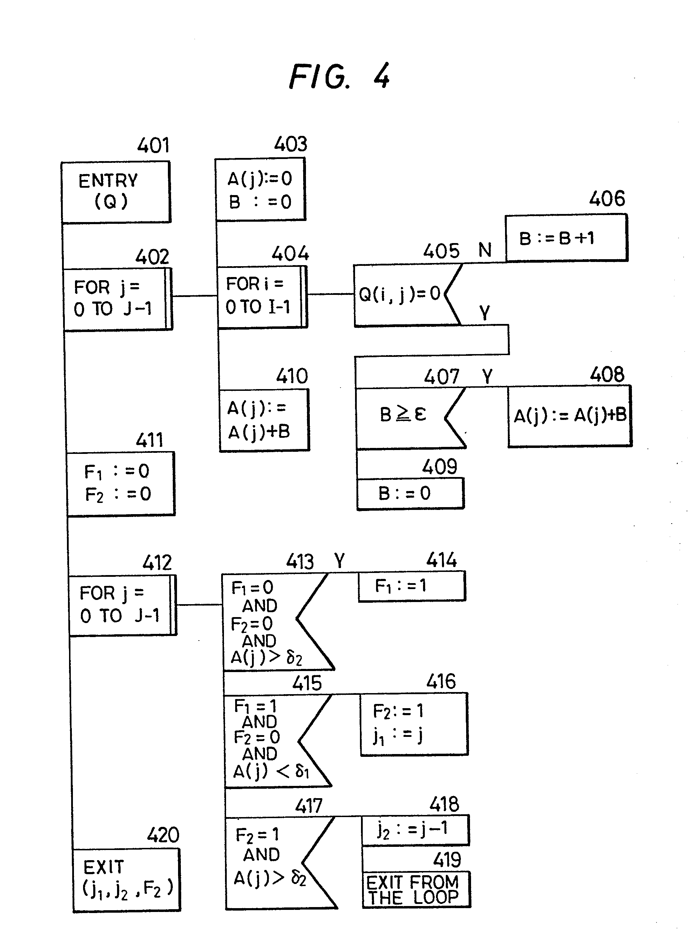

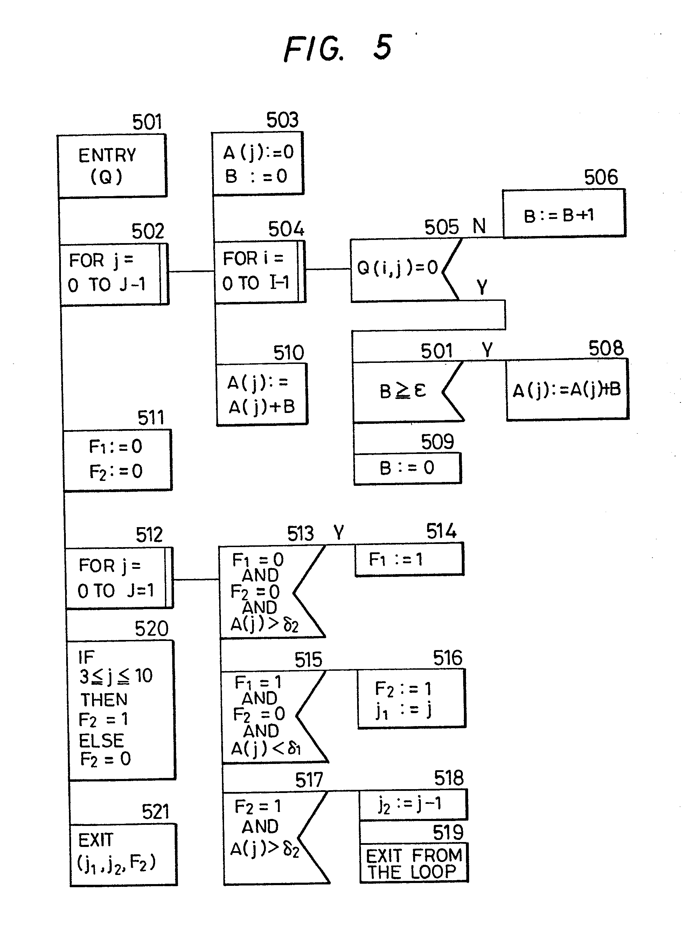

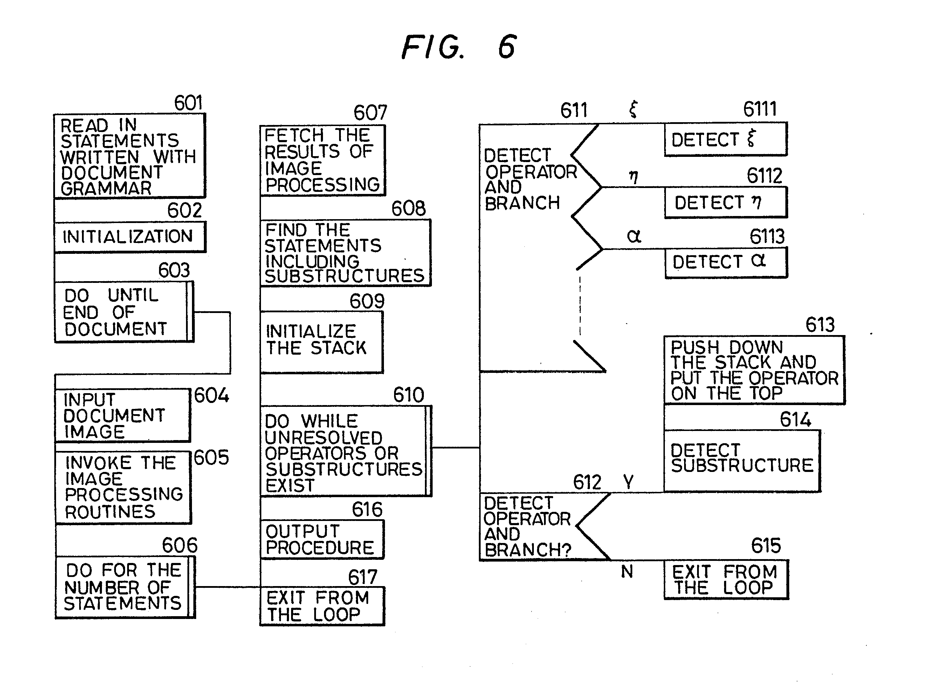

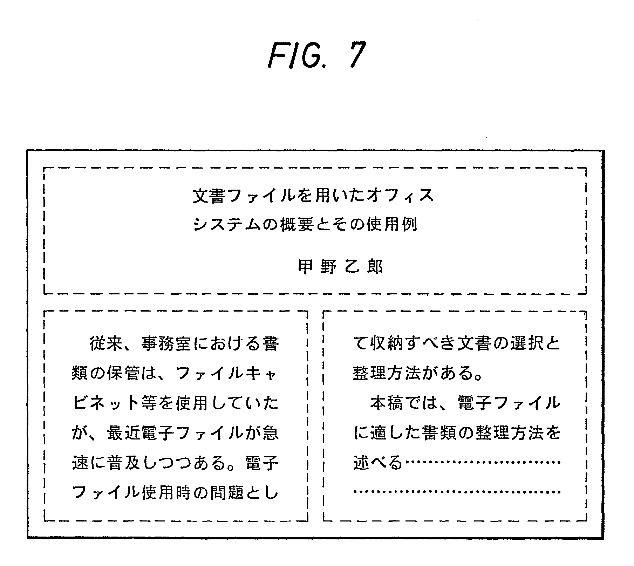

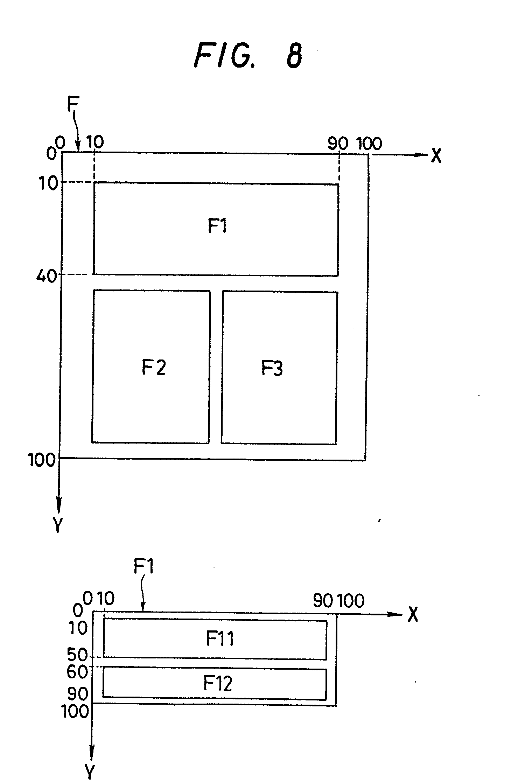

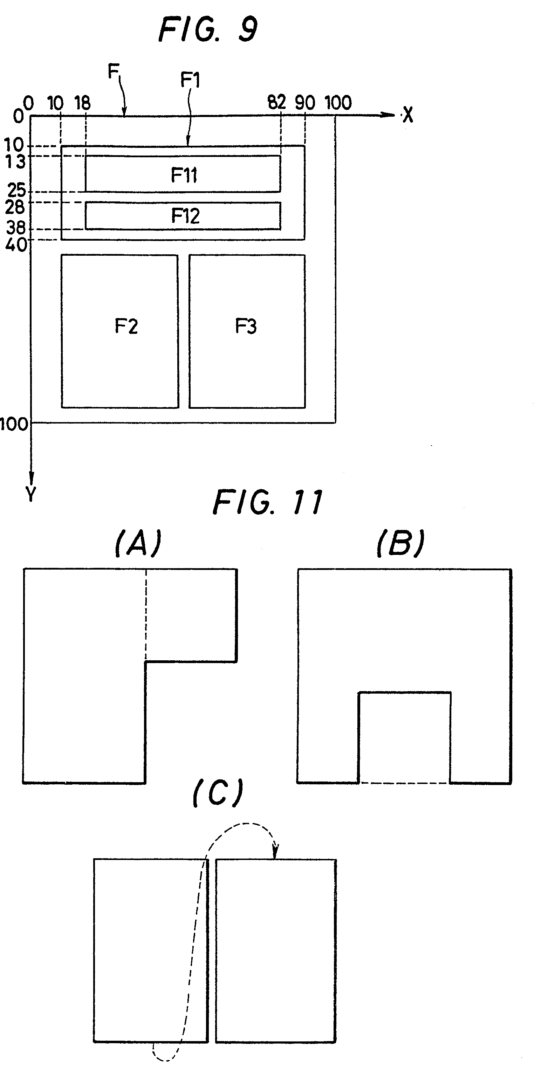

The first rule of the grammer described above
expresses that various kinds of documents are available
and the technical paper is one of the kinds.  The second
rule expresses that a technical paper consisting only
of a title page (Fig. 1, 1) exists, and the third rule
represents that an arbitrary number (inclusive of 0) of pages
may be added to the last of a certain paper.  The
fourth rule represents that on the title page, a title
content (Fig. 1, 3) lies below a UDC symbol, that is,
universal decimal classification (Fig. 1, 3), "author abstract" (Fig. 1, 4) lies below the former, followed
then by the text (Fig. 1, 7) and finally "page number"
(Fig. 1, 9). Here, the "author abstract" represents that
"author group" (Fig. 1, 6) exists on the right side of
the abstract (Fig. 1, 5) as shown in the 12th rule.
Furthermore, the abstract is "English textline region" as
shown in the 13th rule. The author group may consist of
one author as shown in the 14th rule, or may consist of
a plurality of authors by adding other authors (in an
arbitrary number) below the author group as shown in the
15th rule. The author consists of a horizontal
combination of Japanese textline (person name) with
English textline (person name) as shown in the 16th rule.
Since the text (Fig. 1, 7) vertically halves one page in
this embodiment, the concept of "column" (Fig. 1, 8) is
introduced so that the text consits of horizontal
combination of the columns, as shown in the 18th rule.
Each column consists of continuation of sections as shown
in the 19th rule. Section text consists of paragraphs as
shown in the 26th rule, and the paragraphs are either
Japanese textline groups or figure-tables as shown in the 27th
and 28th rules. The Japanese
textline consists of horizontal continuation of Japanese
characters via $\xi$, $\alpha$ and $\beta$ as shown in the 30th to 32nd
rules. Here, $\xi$ represents simple horizontal continuation,
$\alpha$ does horizontal touch and $\beta$ does horizontal over-up, and any of them will occur. The Japanese character includes hiragana, katakana, kanji, alphabet, numeral, and the like, as shown in the 45th rule.

To understand a document, an input document is first assumed to be a technical paper, and whether or not the structure described in the document grammer exists is sequentially examined. In this case, different image processing is applied to each operator. For example, since the operator $\eta$ represents that the substructures continue vertically, processing for detecting the continuation of the vertical substructure corresponds to this operator $\eta$. As an example of such processings, there is a processing which detects the continuation of horizontal white pixels. Similarly, a processing which detects the continuation of the vertical white pixels and, segments character corresponds to $\xi$, and a processing which detects the inclined continuation of the white pixels and then segments the character corresponds to $\beta$.

As can be understood from the description given above, the document grammer proposed in the present invention describes the structure of a complicated document hierarchically and recursively. Therefore, this grammer can describe those objects which have not conventionally been easy to describe, such as those having an indefinite number of textlines and those having substructures whose appearance is indefinite. Understanding of a wide variety of documents can be made by describing the physical relation of the substructures by means of the operators and then verifying the relation expressed by the operators by image processing.

Hereinafter, preferred embodiments of the invention will be described in detail with reference to the drawings.

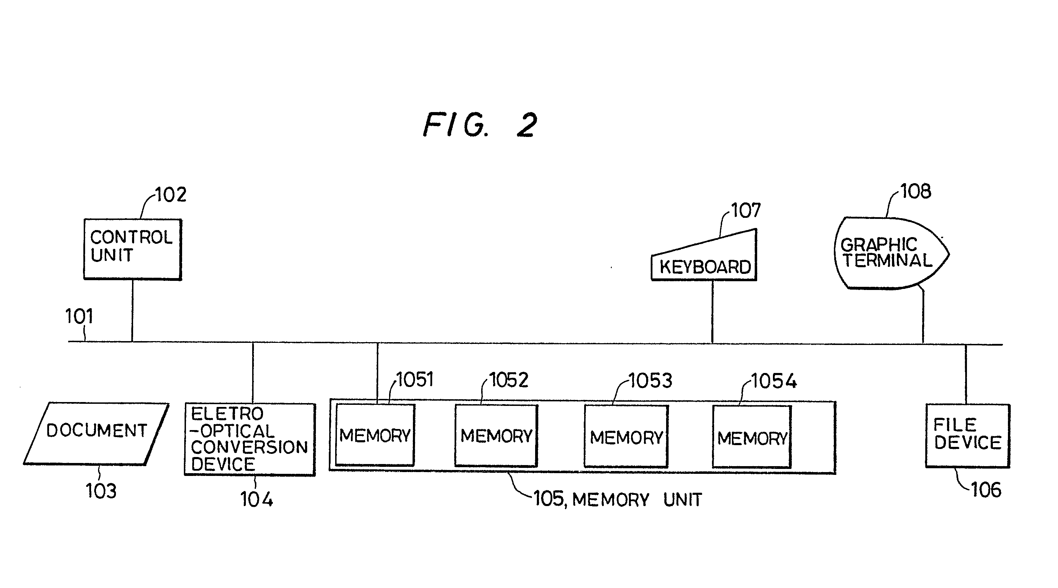

Fig. 2 is a block diagram showing the construction of an apparatus which employs the document processing system in accordance with one embodiment of the present invention. Each constitutent portion of the apparatus is connected by a bus 101, and the overall operation of the apparatus is controlled by a control unit 102. The information (document image) on the document 103 is scanned by an photo-electric conversion device 104, is digitized and is then stored in a memory 1051 through the bus 101. The memory 1051 constitutes a part of a memory 105 in cooperation with later-appearing memories 1052, 1053 and 1054. Heretofore known efficient coding may be effected when digitizing the document information, and the memory capacity of the memory for storing the document image can be saved by so doing.

In the description to follow, digitizing is effected for one pixel per bit, but one pixel may be
expressed by a multi-value, and may further be provided
with color information by effecting ·photo-electric
conversion using a color scanner. The normalized image
which is obtained by applying heretofore known correction
of position and correction of rotation to the document
image by the control unit. 102 is stored in the memory
1052. Document understanding is effected to this nor-,
malized image by the program control of the control unit
102 in the following manner, and the result of understanding is produced to a file device 106.

Fig. 3 is a flowchart showing the flow of
processing of document understanding in a PAD (Problem
Analysis Diagram) style. Step 302 is initialization
of the whole. Step 303 is an iteration loop which
iterates the following processing until the end of the
document. The image of one page is applied at step 304.
Step 305 is loop control which interprets this page in
accordance with the document grammer. At step 306, one
statement is extracted, and parsing is effected at steps
307 and so on and whether or not this one statement is
to be accepted or rejected is decided. Initialization
of stack used for the subsequent parsing operation is
effected at 307. The stack is placed in the memory
1054. Step 308 controls the flow of processing from step 309 to step 313. Step 309 detects the existence of operators, and is a group of branches to the processings that correspond to the operators 3091 - 3093, respectively. 3091, 3092 and 3093 are image processing corresponding to the operators $\xi$, $\eta$ and $\alpha$, respectively. These image processings will be described in detail elsewhere. Step 310 detects whether or not the operator(s) exists, and if not, the processing exits at step 313 from the loop of 308 and so on and shifts to the processing (307) of the next textline. If the operator exists, the stack is pushed down and the operator is on the top at step 311, and step 312 detects the existence of substructure. Detection of the substructure consists of a portion 3121 which identifies the terminal symbol and a portion 3122 which indentifies the nonterminal symbol.

The processing of 3122 is made by recursively effecting the processing of step 307 and so on for part of statement. Identification of the terminal symbol is a processing which effects character recognition in the case of numerals, for example, and decides whether or not the recognized result belongs to the group of numerals.

When the interpretation of all the substructures and operators is completed in the manner described above, understanding of this page in the document is completely finished.  The result of document understanding
includes the substructures in the stack (memory 1054)
and its content (character string), and the operators
between the substructures.  After converted to prescribed
codes at step 314, these results are outputtted to the
file device 106.  If interpretation is not possible in
any statement of the grammer, this document can not be
understood.  This is the case where the procedure exits
from loop at step 313 for all the textlines, and this
state is decided at step 316.  If the document can not
be understood, reject procedure is effected at step 317.
For instance, the final result of document understanding
is displayed on a display 107, and is corrected by man-machine
interaction using a keyboard 108.

Fig. 4 is a  flowchart  expressing image processing
for the operator η described at 3092 in Fig. 3, that is,
a processing which detects the horizontal continuation
of the white pixels, in the PAD style.  In Fig. 4, step
401 is an entry to the main processing, and a normalized
image Q stored in the memory 1052 is given.  At step 402,
processings of steps 403 - 409 are iterated
for the ordinance of scan line j to obtain the sum of
black pixles in a long run A (j).  Step 403 is an
initialization step.  Step 404 decides whether the
pixel Q (i, j) in the scan line is 1 or 0, and if it is 1, the run length B of black pixels is counted at step
406. If Q (i, j) is 1, summation processing is
effected at step 408 when the run length B till the
previous pixel is found greater than a threshold $\epsilon$ by
the decision at step 407, and the sum length B is reset
at step 409. After completion of the loop, B is added
to the sum A (j) at step 410, because in the loop from
the step 404 and so on, summation at the rightmost
pixel (i = I - 1) is not effected. Since the decision
of step 407 is added, summation is effected for A (j)
only when a relatively long run of black pixels exists,
so that the influence of noise is not much great.

The procedure from steps 411 to 420 is a
processing which detects that a region  smaller than
the threshold δ1 in the A (j) is interposed by region
greater than the threshold δ2. Step 411 is initializa-
tion of flags F1, F2. Step 412 iterates the procedures
of 413 - 419 for the ordinance of scan line j. Step 413
detects that A (j) goes over at first time the threshold
δ2, and the flag F1 is set at step 414. Step 415
detects that A (j) goes under at first time the threshold
δ1 under the state of F1 = 1, and the flag F2 is set at
step 416 and at the same time, j at this time is stored
as j1. Step 417 detects the point at which A (j) goes
over the threshold δ2 under the state F2 = 1, and the
previous value of j one before is stored as j2 at step 418 and procedure exits from the loop of 412 and so on.  Step 420 is an exit, and provides the places of the run of white

pixels j1, j2 and the flag F2 to the outside.  F2 = 1 represents the success of detection, while F2 = 0 represents that the condition of the run of white pixels is not found in the loop of 412 and means the failure of detection.

Next, the second embodiment of the present invention will be described.  Though this embodiment is realized by the same block diagram as that of the first embodiment, the document grammer to be used is somewhat different.  In other words, the operators representing the relation between the substructures such as $\xi$, $\eta$,

$\alpha$, $\beta$, $\circledcirc$ , $\gamma$, $\delta$ are connected by parameters representing the physical quantities, and are expressed for example, in the following way.

$\xi$ (1, 5), $\eta$ (3, 10), ......

In this case, $\eta$ (3, 10) represents that clearance of at least 3 mm and up to 10 mm exists in the vertical direction.  The flowchart of the first embodiment for detecting the operator $\eta$ (Fig. 4) is changed to Fig. 5.  In Fig. 5, the procedures from the steps 501 to 519 are the same as those of steps 401 to 419 of Fig. 4.  Step 520 decides that the run of white pixels detected at steps 512 - 519 is from 3 to 10.  Step 521 is the same as the step 420.  The statement of the document grammer used in the second embodiment is somewhat more complicated than the statement of the document grammer of the first embodiment, but it has the advantage that the erroneous judgement in document understanding can be more easily avoided.  This grammer is suitable for processing of documents having relatively less fluctuation of formats.

Next, the third embodiment of the present invention will be described.  Though this embodiment can be realized by the same block diagram as that of the first embodiment (Fig. 3), the flow of control is different from that of the first embodiment (Fig. 3), and is such as shown in Fig. 6.

Fig. 6 is a flowchart representing the flow of processing of document understanding in the third embodiment in the PAD style.  First of all, statements written with document grammer are read into the memory 53 from the file device (not shown) at step 601, and initialization of the whole system is effected at step 602.  Step 603 is an iteration loop which iterates the following procedures till the end.  The image of one page of the document is inputted at step 604, and image processing routine is invoked at step 605.  At this time, which area in the image is to be processed
is designated.  The image processing routine operates
in parallel with the interpretation of statements, which
will be described below, using multiprogramming or a
multiprocessor, directly extracts figures, tables,
characters and other terminal symbols from the image
to be processed, and represents those data, which
represent extraction, into specific address in the
memory.  Incidentally, when the multiprocessor is used,
some additions are necessary to the block diagram of
Fig. 2, but such additions are hereby omitted because
the block diagram can be easily changed.

Step 606 is a control loop which interprets
this page in accordance with the document grammer.  At
step 607, the result of image processing is examined,
and the statement describing its substructure is
searched at step 608 in accordance with the extracted
result.  Since this processing is carried out in
parallel with image processing, completion of the image
processing must be awaited.

Step 609 effects initialization of stack used
for the subsequent processing.  Step 610 processes for
the textline, and controls the flow of processing from
steps 611 to 615.  Step 610 is the same as step 309 in
Fig. 3.  Step 612 detects the existence of the operators and if they do not exist, the procedure exits from the loop of steps 609 and so on. If they exist, the stack is pushed down and the operator(s) is put on the top. Step 613 detects the existence of the substructure. Detection of the substructure is effected recursively for the rest of images other than the portion detected by the image processing routine, but since it is fundamentally the same as in Fig. 3, it is hereby omitted. Steps 616 (output of the final result of document understanding) and 617 are the same as those in Fig. 3. Although the third embodiment is more complicated than the first embodiment, the processing is faster in this embodiment because the results of image processing excitates the parsing of the grammer so that the irrelevant portion of grammer may not be parsed.

Next, the parsing method will be explained before the description of the fourth embodiment of the present invention. Fig. 7 shows an example of one page of a technical paper having a predetermined format. Though the following description is directed to the technical paper, the present invention can be applied also to other documents by changing a part of the document grammer because the form of grammer is somewhat different. Therefore, the present invention is not particularly limited to this example of the technical paper.

The following is an example of a grammer
describing the structure of the document (hereinafter
referred to as the "document grammer").

```
  (defform  F
    (form  F 1 ( 1 0   9 0   1 0   4 0 ))
    (form  F 2             ... ...          )
    (form  F 3             ... ...          ))
  (defform  F 1
    (form  F 1 1 ( 1 0   9 0   1 0   5 0 ))
    (form  F 1 2 ( 1 0   9 0   6 0   9 0 )))
  (defmac  L I N E - 1 ( % 1 )
    (point  ? Y 1 (mode I N  Y  L E S S )
    (point  ? Y 2 (mode O U T  Y  L E S S )
    (form  % 1 ( 0   ? W   ? Y 1   ? Y 2 )))
```

The grammer described above will be explained
with reference to the example of Fig. 7.

The first symbol "deform F ... "represents
that the format F consists of a format F1 and a
horizontal continuation of formats F2 and F3 below
the format F1 and shown in Fig. 8.  In Fig. 7, the
portions of F, F1, F2 and F3 corresponding to Fig. 8

0175928

are encompassed by dashed line. The four numeric values in the parentheses 10, 90, 10, 40 next to the format F1 represent the position of the region of the format F1 when the full region corresponding to the format F is expressed as 100 x 100. Here, the coordinate system has its origin at the upper left. The numeric values representing the region are a minimum value of X-ordinate, a maximum value of X-ordinate, a minimum value of Y-ordinate and a maximum value of the Y-ordinate. When the parameter values are already known as in this embodiment, the values may be directly written. Similarly, the formats F2 and F3 are described by rectangular regions.

The next symbol "defform F1 ... "represents that the format F1 consists of formats F11 and F12 that are located vertically. In other words, the region of the format F11 in the Y direction is from 10 to 50, and that of the format F12, from 60 to 90. The positions of the regions of the formats F11 and F12 are described in the coordinate system using the origin at the upper left of the format F1. Therefore, when viewed from the format F, it is a relative coordinate system.

In the manner described above, when the format is described by the rectangular region and is described hierarchically as a group of the regions one after
another, the image can be described in a general form.
It is of course possible to describe by the absolute
coordinate system with the format F being the reference
without using the hierarchical expression, as shown in
Fig. 9.  In such a case, the rectangular regions
can be designated in the following way in the same way
as in Fig. 8.

```
(deform F
        (form F 11 (18, 82, 13, 25))
        (form F 12 (18, 82, 28, 38))
        (form F 2    ........     )
        (form F 3    ........     )
```

The subsequent symbols "defmac LINE - 1 (%1)"
and so on are definition of macro-statement.  The
following description of the three textlines as the
main body of the defintion of macro-statement expresses
that the first line from above the rectangular region
is format %1.

```
        (point ?Y 1 (mode IN Y LESS))
        (point ?Y 2 (mode OUT Y LESS))
        (form %1 (0 ?W  ?Y1  ?Y2))
```

Here, symbol ?W represents the vertical size
(height) of the format and symbol ?H does the horizontal
size (width) of the format.  Symbols ?Y1 and ?Y2 are

variables that are identified by search, as will be described next.

Symbol "point" represents the search of a point that satisfies a certain condition, and substitution into the variable. The search condition is designated by "mode". "IN·OUT" represents that the search point is a change point from a region of white pixels to a region of black pixels, or a change point from the black pixels to the region of the white pixels. "Y" represents the axis of search and "LESS" does the search direction. Symbol "area" represents a region within the range of search.

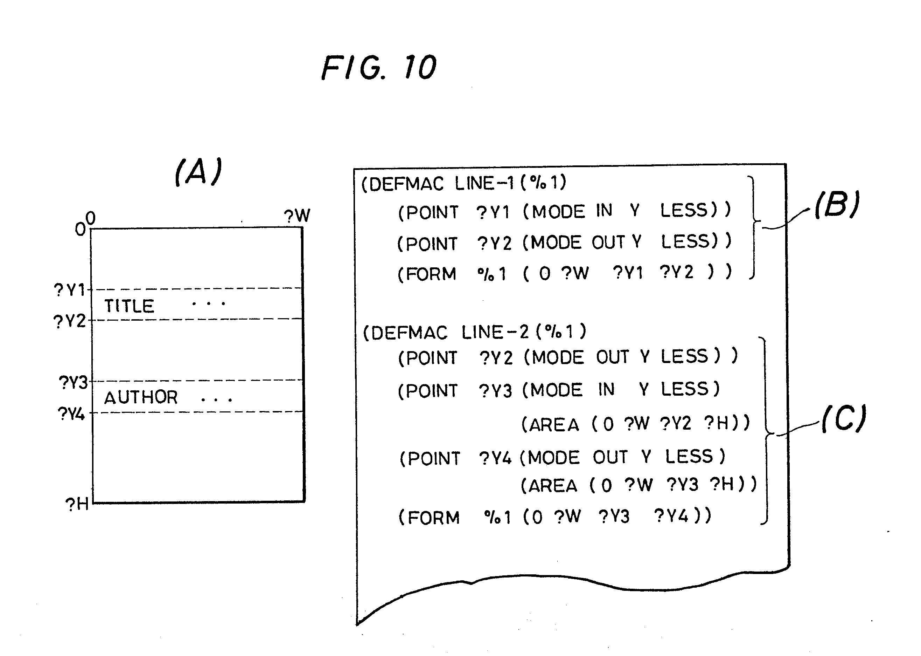

The search method will be explained about the case of the statement of the definition of macro-statement by way of example, with reference to Fig. 10.

Symbol (A) represents that the textline "Title ... , Author ... " exists in the format. (B) and (C) presents the coordinate values of these textlines in the Y direction, that is, the first and second lines. The first line exists from ?Y1 to ?Y2, and the second line exists from ?Y3 to ?Y4. As described above, (B) is the macro-statement that defines that the format of the first line is %1, and (C) is a macro-statement defining that the format of the second line is %1. The usage of these macro-statement is as follows.

(LINE - 1 F 1)

(LINE - 2 F 2)

In other words, the statement of the first line is F1, and the format of the second line is F2. The condition of search of the coordinate value ?Y1 designated by the "point" of the second line of (B) is IN Y LESS. Therefore, the search condition is such that the change point from the region of the white pixels to the region of the black pixels and the axis of search are Y, and its direction is LESS, that is, search is made from the Y-ordinate having a smaller value. When search is to be made from the Y-ordinate having a greater value, designation GREATER must be made. The upper bound ordinate value ?Y1 satisfies these conditions. The lower bound ordinate value ?Y2 of the first line designated by the "point" in the third line of (B) under the search condition described above may be described as the change point from the region of black pixels to the region of white pixels. In other words, the condition of search of ?Y2 is OUT Y LESS.

Next, (C) which defines the second line in the format will be explained. The second line is next to the first line. Therefore, the lower bound ?Y2 of the first line is searched, and ?Y3 represents the region within the range of search by area. In other words, similar search can be made from the lower bound of the first line by describing the rectangular region as the object of search as

$$O \quad ?W \quad ?Y2 \quad ?H$$

In document understanding, the statements written with document grammer are referred to, and whether or not the rectangular region described therein exists is sequentially examined.  When the rectangular region described while including variables is searched, the numeric values of the variables can be obtained,

and the numeric values are thereafter used in substitution to the variables.

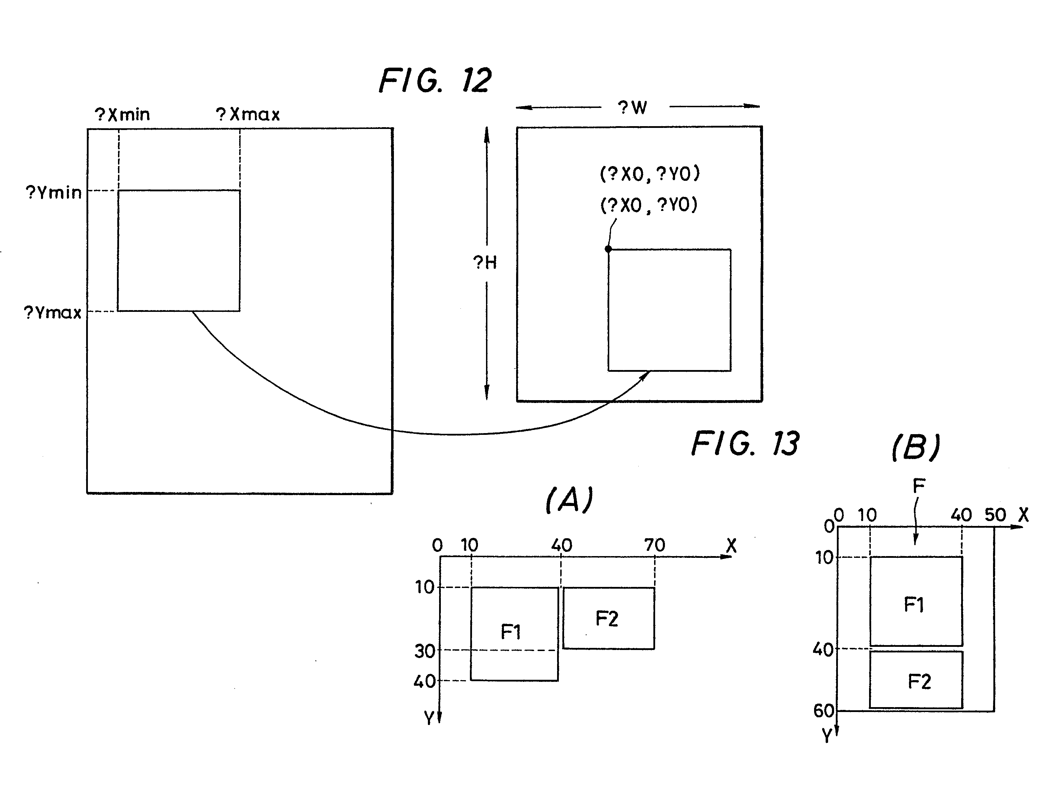

Next, the operation between the rectangular regions will be explained.  In an actual document, regions having shapes other than the rectangular shape appear.  Fig. 13(A) and (B) show examples of regions having shapes other than the rectangular shape.  (C) shows an example of a region which is broken into two regions.  As represented by dashed lines, Figs. 13(A) and (B) can be considered as the union or difference of two rectangular regions.

Description of (C) will become simple by assuming that it virtually consits of two rectangular regions that together form one rectangular region.  The virtual transposition of the region is defined in the following manner in order to make it possible to make the operation between

these rectangular regions.

```
(map & form F

   (space     ?W     ?H)

   (position

   ((  ?XO     ?YO)

   ( ?Xmin    ?Xmas    ?Ymin    ?Ymax))

   ( ...                            ))
```

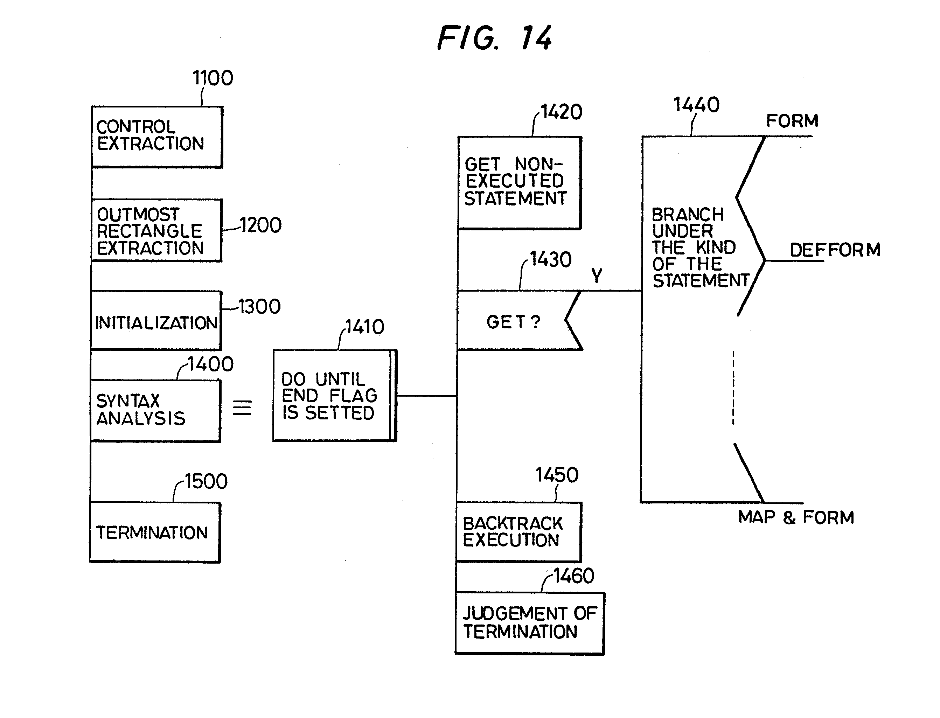

Fig. 14 shows the meaning of this definition.
The term "space" represents that a rectangular region
having a width ?W and a height ?H is set afresh as a
format F, and transposition is made into this region.
The term "position" represents the upper left
coordinates of the rectangular region of the destination
of transposition.  The rectangular region of the
destination of transposition expressed by four values

         ( ?Xmin´ ?Xmax   ?Ymin    ?Ymax) are copied to the destination of transposition described
above.

This virtual transposition will be described
more definitely with reference to Fig. 13.  It will be
now assumed that an actual format as the object of
analysis is located such as shown in (A).  This is
referred to as "Multicolumn" or "double column".  The
formats F1 and F2 are located spatially as the horizontal
neighbors with each other, but semantically they must be thought
to be located as the vertical neighbors as shown in (B).

The operation between the rectangular regions can be expressed as follows.

```
(map&form F
    (space 50 60)
    (position ((10 10) (10 40 10 40))
              ((10 40) (40 70 10 30)))))
```

The virtual format shown in (B) sets a rectangular region having a width 50 and a height 60 by "space." The relation between (B) and (C) is expressed as follows.

```
(position ((10 10) (10 40 10 40))
          ((10 40) (40 70 10 30)))
```

The rectangular region (10 40 10 40) in (B) is transposed to the region having its origin at (10 10) in (C).

If the virtual transpositions described above are combined, a region having a complicated shape shown in Fig. 13 can be expressed by the operation between at least two rectangular regions. For example, Fig. 13(A) can be expressed as the transposition of two rectangular regions having different sizes while keeping them adjacent to each other.

As can be understood from the description given above, the document grammer proposed in the present invention represents the structure of the document as the combination of the rectangular regions and expresses the relation between the rectangular regions by the grammer. Therefore, the expressibility of the document can be increased, and those objects whose handling has been difficult conventionally in such a case where the number of textlines in the region is insufficient or a case where the appearance of a specific rectangular region is indefinite, can now be described. Therefore, a wide variety of documents can be analyzed.

Hereinafter, the fourth embodiment of the present invention will be described with reference to the drawings.

This embodiment is practised by the apparatus shown in the block diagram of Fig. 2 in the same way as the first embodiment, but processing of the control unit 102 is different. It will be assumed that the statements of the document as the object written with the document grammer described already are stored in advance in the memory 1053. The control unit 102 effects document understanding processing of the normalized image using these statements. Here, the term "document understanding processing" means to segment the data into a plurality of rectangular regions and to classify each region. Among the regions obtained as the result of document understanding processing, the image of the portion of a predetermined region as the object of retrieval is sent to a character recognition unit 6 to recognize the internal character pattern. Generally, original document images have complicated shapes, but since the region obtained as the result of document understanding is rectangular, character segmentation and recognition can be made easily in accordance with known methods. The character code string obtained as the result of character recognition or the character code string obtained by editing the former is retrieval information of the input document. The retrieval information of the input document thus obtained and the digital image of the document are produced to the file device 106. When outputting the digital image of the document to the file device 106, it may be outputted separately in the unit of a plurality of divided rectangular regions.

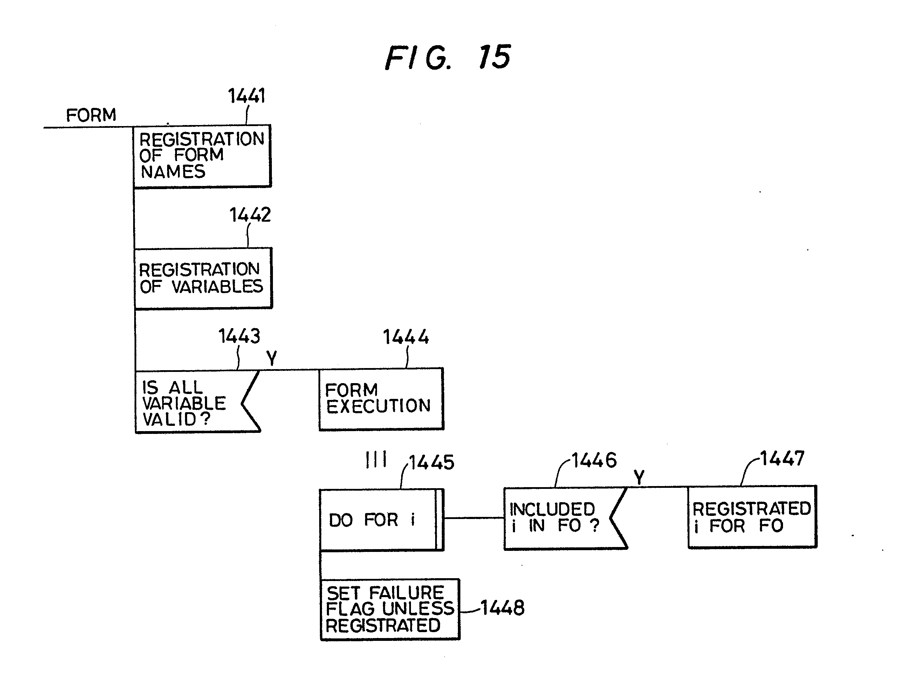

Hereinafter, the document understanding processing will be described in detail. Figs. 14 and 15 are flowcharts useful for explaining the flow of control of document understanding. The flow of control is written in the PAD (Program Analysis Diagram) style. Contour extraction of the document image is effected at step 1100 and is stored in the memory 1054. Known methods may be used for contour extraction. So-called "connected region extraction" may also be used in place of contour extraction. The maximums and minimums of the X- and Y- ordinates

$$Xmin(i), \quad Xmas(i), \quad Ymin(i), \quad Ymax(i)$$

are extracted from each contour i extracted at step 1200. The outmost rectangle of the contour i can be determined from these four numeric values. Steps 1300, 1400 and 1500 are initialization, main body and judgement of termination of the parsing processing, respectively. At step 1300, the statements written with the document grammer, that are stored in the memory 1053, are copied to the work memory 1055, and various tables and variables in the program are initialized.

The main body of 1400 syntax analysis consists of 1410 through 1460. Step 1410 makes control so that the procedures from 1420 to 1450 are repeated until judgement of termination is effected at 1460. A statement in the statements written with the document grammer is extracted at 1420. The term "unresolved statement" represents those textlines which contain such variable(s) whose value is not yet determined, or those textlines for which corresponding document regions are not yet determined. Judgement is made at 1430 so that if the unresolved statement does not remain, the procedure of step 1440 is to be skipped. In this case, judgement of termination is executed.  If the statement extracted
at step 1420 is an unresolved statement, the procedure
of step 1440 is executed.  This is the portion which
judges and branches the kinds of statements, and the
content of processing changes with the kinds of statements.
The explanation on Figs. 14, 15 and so on deals only with
the "form statement", that is, the case where

        (form FO
            ( ?Xmin   ?Xmax   ?Ymin   ?Ymax)
            (shrink   ?X     ?Y))

However, as to the other statements, too, processing
peculiar to these statements is executed.

        In Fig. 15, 1441 - 1448 are portions which
process the predicate "form." Step 1441 checks whether
or not the format label FO is registrated, and if not,
it is registrated to the format table at step 1442.
Step 1442 checks whether the character string written
to the positions of the variable names ?Xmin, ?Xmax,
?Ymin, ?Ymax, ?X, ?Y are variables or numerics, if
they are variables, whether or not they are registrated,
and if they are not yet registrated, they are registrated
to the variable table.  If the variables are already
registrated, whether or not the values are determined
is checked.  If they are not, the "form" processing
is completed.  (In this case, this statement is the unresolved statement.)  If they are determined, the
variable name in the statement is replaced by the
value described above.

As a definite example, when

?Xmin = 0,   ?Xmax = 90,

?Ymin and ?Ymax: not registrated

?X = 5,   ?Y = 5,

the statement described above can be replaced as follows:

(form FO

( 0 90   ?Ymin   ?Ymax)

(shrink 5   5),

and the variables ?Ymin and ?Ymax are registrated to the
variable table and the values are indefinite.

At step 1443, branch is effected depending upon
whether or not the variable names in the statement are
all replaced by the numeric values, and if all are
replaced, the "form" execution procedure of step 1444
is effected.  The detail of the "form" execution is
represented by 1445 - 1448.  Step 1445 represents
that the following procedures are iterated ·for the
contour i extracted at step 1200.  At step 1446, the
minimums and maximums of the X- and Y-ordinates of the
contour i, that is,

Xmin(i), Xmax(i), Ymin(i), Ymax(i) are compared with the numeric values corresponding to the variables in the statement, that is,

?Xmin, ?Xmax, ?Ymin, ?Ymax, ?X, ?Y and whether or not this contour satisfies the following

relation is checked:

$$?Xmin < Xmin(i) < Xmas(i) < ?Xmax$$
$$?Ymin < Ymin(i) < Ymax(i) < ?Ymax$$
$$?X \quad < Xmax(i) - Xmin(i)$$
$$?Y \quad < Ymax(i) - Ymin(i)$$

When the condition described above is satisfied, the contour i is registrated to the component table of FO at step 1447. When the contour satisfying the condition described above does not exist, step 1448 sets the flag of failure of parsing.

As described above, the procedures of steps 1441 to 1448 can detect whether or not the structure corresponding to the statement "form" exists in the input image. This also holds true of the statements other than the "from" statement. In the case of "from", no output data exists, but depending upon the statements, there is a statement whose variable is replaced by the parameter obtained at the time of analysis, and its result is used for the other statements.

Step 1450 examines the analysis failure flag, and when analysis fails, backtrack and retrial are then made. In this case, control is made so that the procedure is returned to the resolved statement, the variable replaced by the parameter is written once again to the original state, and other possibilities are searched.

Step 1460 detects whether or not the analysis failure flag is set or whether or not the analysis failure flag is set after the backtrack and retrial, and makes judgement of termination.

Step 1500 is a portion which passes the data obtained as the result of analysis to the outside. The data to be passed to the outside include the coordinates of the rectangular regions on the document detected corresponding to the format label, and the like.

When the analysis fails for the statement having the designation to set the analysis failure flag, this document can not be understood. In this case, the procedure for rejection is executed. For example, the final or intermediate result of document understanding is displayed on the display 108 and is corrected by man-machine interaction.

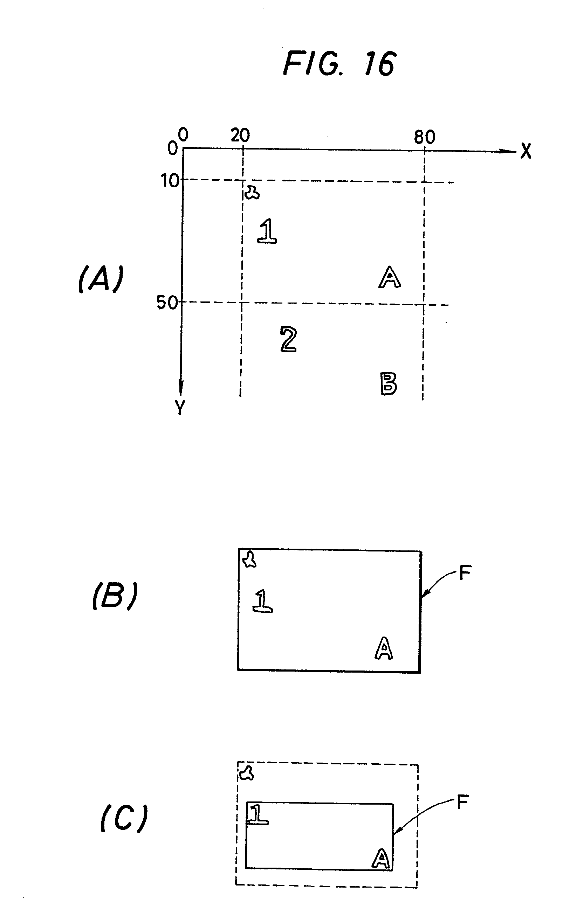

Next, the content of the "form" execution will be explained definitely with reference to Fig. 16. Fig. 16(A) shows the case where a noise ( 🝝 ) and character 1, A, 2, B pattern exist in the image.

Fig. 16(B) shows the case where the parameter at the time of execution of the "form" statement is

(form F (20   80   10   50)   (shrink 0   0)).

Fig. 16(C) shows the case where the parameter
at the time of execution of the "form" statement is

(form F (20   80   10   50)   (shrink 5   5).

As shown in the drawings, the noise and the
character 1, A pattern are registrated to the element
table of the format F in the case of (B), and in the
case of (C), the noise is not registrated but is
eliminated by shrink designation, though the character
1, A pattern is registrated.  After the execution of
"form", the rectangular region of the format F can be
normalized by the character pattern contained in the
region as shown in the drawings, and hence the size of
the region can be flexibly identified.

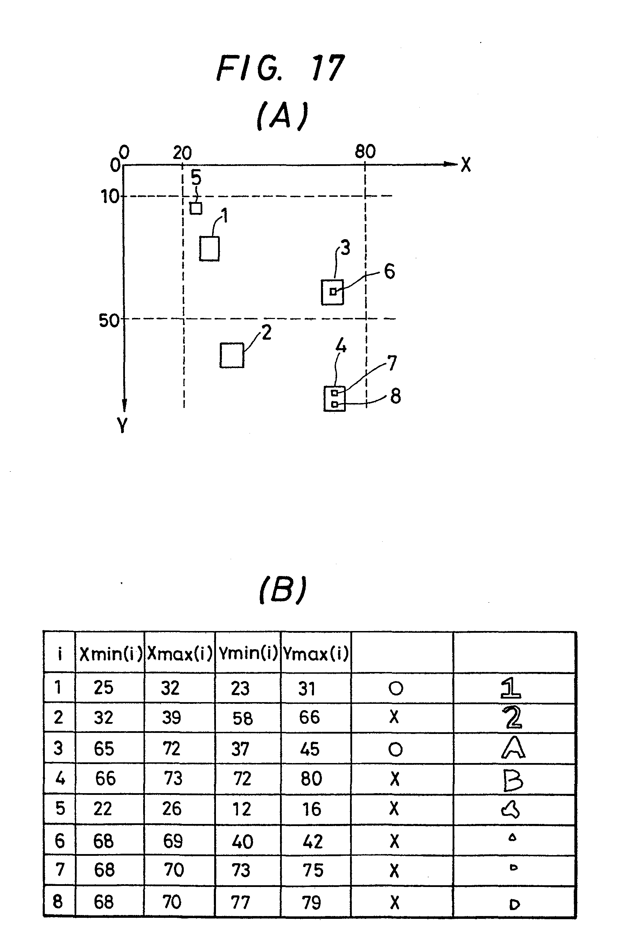

The selection method of the contour at the time
of execution of "form" will be explained definitely with
reference to Fig. 17.  Fig. 17(A) shows the outmost
rectangle as a result of processing of the image
composed by contours at step 1200 in Fig. 14.  Reference
numeral 5 represents the noise, 1 through 8 are character
patterns and 6 through 8 are so-called "inner contour".
Fig. 17(B) shows their Xmin, Xmax, Ymin and Ymax.
Whether or not they are contained in the format F is
judged by whether or not the following relation are
satisfied:

$$20 < Xmin(i) < Xmax(i) < 80 \quad .$$

$$10 < Ymin(i) < Ymax(i) < 50$$

$$5 < Xmin(i) - Xmin(i)$$

$$5 < Ymax(i) - Ymin(i)$$

In this case, the contours i = 1 and 3 are satisfied. Since the character pattern of 3 contains the pattern of 6, it may be eliminated from the format F.

[Effect of the Invention]

As described above, the present invention makes it possible to automatically parse the object document to be stored. Since the input of the secondary information from the keyboard is not necessary or can be drastically reduced, the input can be remarkably simplified. Furthermore, since the inputted documents are resolved into substructures, the saving of storing spaces of files by storing these substructures in place of document images or the adranced retrieval using the substructures can be realized.

What is claimed is:

1.   An image understanding system comprising:
memory means (105) for storing statements written in accordance
with a grammer describing an image by a plurality of
substructures and by relative relation between said
substructures; means (104) for converting an input image to
a digitized image by photo-electric conversion;
syntax analysis means for analyzing the statement
written in accordance with said grammer; image search
means for searching whether or not said substructures
designated by said analysis and their relative relation
exist in said digitized image; and image structure
understanding means (102) for understanding the structure of
said input image on the basis of the result of said
search.

2.   An image understanding system according to
claim 1 wherein said substructures and their relative
relation are described by operators.

3.   An image understanding system according to
claim 2 wherein said substructures contain operators
representing that they are separated by the run of
horizontal or vertical white pixels.

4.   An image understanding system according to
claim 2 wherein said operators are connected by physical
parameters.

## FIG. 1

U. D. C. 003. 324

文 書 理 解 シ ス テ ム
DOCUMENT UNDERSTANDING SYSTEM

AN APPROACH TO A
DOCUMENT ANALYSIS SYSTEM
IS PROPOSED. TO SETTLE
TECHNICAL —————— —

中野康明 Y. NAKANO
藤沢浩道 H. FUJISAWA

2. 緒言
文書を構成する要素である
見出し，本文，写真，図表
などを抽出し、・・・・・・・・・・・
・・・・・・・・・・・・・・・・・・・・・・・・

このような研究は国内・国
外の各所で遂行されている
が，・・・・・・・・・・・・・・・・・・・・
・・・・・・・・・・・・・・・・・・・・・・・・

325

8

9

7

FIG. 2

# FIG. 3

**301** READ IN STATEMENTS WRITTEN WITH DOCUMENT GRAMMAR

**302** INITIALIZATION

**303** DO UNTIL END OF DOCUMENT

**304** INPUT DOCUMENT IMAGE

**305** DO FOR THE NUMBER OF STATEMENTS

**306** FETCH ONE STATEMENT

**307** INITIALIZE THE STACK

**308** DO WHILE UNRESOLVED OPERATORS OR SUBSTRUCTURES EXIST

**309** DETECT OPERATOR AND BRANCH
- $\xi$ — **3091** DETECT $\xi$
- $\eta$ — **3092** DETECT $\eta$
- $\alpha$ — **3093** DETECT $\alpha$

**311** PUSH DOWN THE STACK AND PUT THE OPERATOR ON THE TOP

**312** DETECT SUBSTRUCTURE ≡

**3121** IDENTIFICATION OF TERMINAL SYMBOLS

**3122** IDENTIFICATION OF NONTERMINAL SYMBOLS

**310** DETECT OPERATOR AND BRANCH?
- Y
- N — **313** EXIT FROM THE LOOP

**314** OUTPUT PROCEDURE

**315** EXIT FROM THE LOOP

**316** SUCCEEDED IN ANALYSIS?
- N

**317** REJECTION PROCEDURE

0175928

## FIG. 4

**401**
ENTRY
(Q)

**402**
FOR j =
0 TO J-1

**403**
A(j):=0
B := 0

**404**
FOR i =
0 TO I-1

**405**
Q(i, j)=0

N
**406**
B := B+1

Y

**407** Y
B ≥ ε

**408**
A(j) := A(j)+B

**409**
B := 0

**410**
A(j):=
A(j)+B

**411**
$F_1$ := 0
$F_2$ := 0

**412**
FOR j =
0 TO J-1

**413** Y
$F_1$ = 0
AND
$F_2$ = 0
AND
A(j) > $\delta_2$

**414**
$F_1$ := 1

**415**
$F_1$ = 1
AND
$F_2$ = 0
AND
A(j) < $\delta_1$

**416**
$F_2$ := 1
$j_1$ := j

**417**
$F_2$ = 1
AND
A(j) > $\delta_2$

**418**
$j_2$ := j-1

**419**
EXIT FROM
THE LOOP

**420**
EXIT
($j_1$, $j_2$, $F_2$)

# FIG. 5

|501|ENTRY<br>(Q)|

|503|A(j):=0<br>B := 0|

|506|B := B+1|

|502|FOR j =<br>0 TO J−1|

|504|FOR i =<br>0 TO I−1|

505   **N**

Q(i,j)=0   **Y**

|510|A(j): =<br>A(j)+B|

501   **Y**

B ≧ ∈

|508|A(j):=A(j)+B|

|509|B := 0|

|511|F₁:=0<br>F₂:=0|

|512|FOR j =<br>0 TO J=1|

513   **Y**

F₁ = 0<br>AND<br>F₂ = 0<br>AND<br>A(j) > δ₂

|514|F₁ := 1|

|520|IF<br>3 ≦ j ≦ 10<br>THEN<br>F₂ = 1<br>ELSE<br>F₂ = 0|

515

F₁ = 1<br>AND<br>F₂ = 0<br>AND<br>A(j) < δ₁

|516|F₂ := 1<br>j₁ := j|

517

F₂ = 1<br>AND<br>A(j) > δ₂

|518|j₂ := j−1|

|519|EXIT FROM<br>THE LOOP|

|521|EXIT<br>(j₁,j₂,F₂)|

# FIG. 6

**601** READ IN STATEMENTS WRITTEN WITH DOCUMENT GRAMMAR

**602** INITIALIZATION

**603** DO UNTIL END OF DOCUMENT

**604** INPUT DOCUMENT IMAGE

**605** INVOKE THE IMAGE PROCESSING ROUTINES

**606** DO FOR THE NUMBER OF STATEMENTS

**607** FETCH THE RESULTS OF IMAGE PROCESSING

**608** FIND THE STATEMENTS INCLUDING SUBSTRUCTURES

**609** INITIALIZE THE STACK

**610** DO WHILE UNRESOLVED OPERATORS OR SUBSTRUCTURES EXIST

**616** OUTPUT PROCEDURE

**617** EXIT FROM THE LOOP

**611** DETECT OPERATOR AND BRANCH

$\xi$ **6111** DETECT $\xi$

$\eta$ **6112** DETECT $\eta$

$\alpha$ **6113** DETECT $\alpha$

**613** PUSH DOWN THE STACK AND PUT THE OPERATOR ON THE TOP

**614** DETECT SUBSTRUCTURE

**612** DETECT OPERATOR AND BRANCH?

Y

N

**615** EXIT FROM THE LOOP

0175928

## FIG. 7

文書ファイルを用いたオフィス
システムの概要とその使用例

甲 野 乙 郎

従来、事務室における書類の保管は、ファイルキャビネット等を使用していたが、最近電子ファイルが急速に普及しつつある。電子ファイル使用時の問題とし

て収納すべき文書の選択と整理方法がある。

　本稿では、電子ファイルに適した書類の整理方法を述べる…………………………

……………………………

## FIG. 8

0175928

## FIG. 9

## FIG. 11

(A)

(B)

(C)

## FIG. 10

### (A)

### (B)

```
(DEFMAC LINE-1 (%1)
    (POINT  ?Y1 (MODE IN  Y  LESS))
    (POINT  ?Y2 (MODE OUT Y  LESS))
    (FORM  %1 ( 0 ?W   ?Y1  ?Y2 ) ) )
```

### (C)

```
(DEFMAC  LINE-2 (%1)
    (POINT  ?Y2 (MODE OUT Y LESS ) )
    (POINT  ?Y3 (MODE IN  Y LESS )
                (AREA ( 0 ?W ?Y2 ?H))
    (POINT  ?Y4 (MODE OUT Y LESS )
                (AREA ( 0 ?W ?Y3 ?H))
    (FORM  %1 (0 ?W  ?Y3   ?Y4))
```

FIG. 12

?Xmin   ?Xmax

?Ymin

?Ymax

?W

?H

(?X0, ?Y0)
(?X0, ?Y0)

FIG. 13

(A)

0  10      40      70   X

10

30
40

Y

(B)

F

0  10      40  50  X
0

10

F1

40

F2

60

Y

F1      F2

0175928

# FIG. 14

# FIG. 15

FORM ──── **1441**
- REGISTRATION OF FORM NAMES

**1442**
- REGISTRATION OF VARIABLES

**1443**
- IS ALL VARIABLE VALID? ── Y ──

**1444**
- FORM EXECUTION

III **1445**
- DO FOR i ──

**1446**
- INCLUDED i IN FO ? ── Y ──

**1447**
- REGISTRATED i FOR FO

**1448**
- SET FAILURE FLAG UNLESS REGISTRATED

0175928

0175928

## FIG. 16

0175928

# FIG. 17

## (A)

## (B)

| i | Xmin(i) | Xmax(i) | Ymin(i) | Ymax(i) | | |
|---|---------|---------|---------|---------|---|---|
| 1 | 25 | 32 | 23 | 31 | O | 1 |
| 2 | 32 | 39 | 58 | 66 | X | 2 |
| 3 | 65 | 72 | 37 | 45 | O | A |
| 4 | 66 | 73 | 72 | 80 | X | B |
| 5 | 22 | 26 | 12 | 16 | X | ⌂ |
| 6 | 68 | 69 | 40 | 42 | X | ▵ |
| 7 | 68 | 70 | 73 | 75 | X | ▫ |
| 8 | 68 | 70 | 77 | 79 | X | ▫ |